# EUROPEAN PATENT APPLICATION

(11) **EP 2 551 069 A2**
(43) Date of publication of application: **30.01.2013**
(21) Application number: 12156110.4
(22) Date of filing: 20.02.2012
(51) Int. Cl.: B25J 9/16

(54) **Robot and method for manufacturing the same**

(30) Priority: 26.07.2011 JP 2011163664
(71) Applicant: Kabushiki Kaisha Yaskawa Denki, Kitakyushu-shi, Fukuoka 806-0004 (JP)
(72) Inventor: Sakaki, Kaori, Fukuoka 806-0004 (JP); Umezaki, Takahiro, Fukuoka 806-0004 (JP); Ichibangase, Atsushi, Fukuoka 806-0004 (JP)
(74) Representative: Grünecker, Kinkeldey, Stockmair & Schwanhäusser

(57) **Abstract**

A robot (10) according to an aspect of an embodiment includes: an articulated arm (15); and a speed reducer (11aa, 12aa, 13aa) that is provided in a joint (11a, 12a, 13a) of the articulated arm (15). The articulated arm (15) performs a multi-axis operation. The speed reducer (11aa, 12aa, 13aa) has rigidity for which an acquisition value obtained by acquiring a deflection amount of a predetermined representative position at the articulated arm (15) for each dimension of a three-dimensional coordinate system is not more than a threshold corresponding to a target precision of the articulated arm (15).

## Description

### FIELD

The embodiment discussed herein is directed to a robot and a method for manufacturing the same.

### BACKGROUND

A conventional robot has been known, which includes an articulated arm and performs various operations by using an end effector of a terminal moving part of the articulated arm. For example, when a laser head or the like is used as an end effector, the robot can perform operations such as for example laser cutting and laser welding on a target object.

The operation using the laser head or the like is generally performed by controlling the articulated arm to raise a precision of a "trajectory" such as for example a straight line and a circular arc drawn by the laser.

For example, Japanese Laid-open Patent Publication No. 2003-71760 discloses a feedback control technique for computing a control target value (hereinafter, "control gain") from an error between the detected actual position and posture of a articulated arm and the targeted position and posture and correcting the position and posture of the articulated arm by using the control gain.

However, the conventional technique has a problem in that increasing a control gain, for example, to obtain a high-accuracy trajectory at a high moving speed causes a vibration of the arm and thus the precision of the trajectory may be degraded.

In other words, the conventional art does not satisfy both of the high precision of a trajectory and the speed-up of a moving speed.

An aspect of an embodiment has been achieved in view of the above problems, and an object of the embodiment is to provide a robot and a method for manufacturing the same that can satisfy both of the high precision of a trajectory and the speed-up of a moving speed.

### SUMMARY

A robot according to an aspect of an embodiment includes: an articulated arm; and a speed reducer that is provided in a joint of the articulated arm. The articulated arm performs a multi-axis operation. The speed reducer has rigidity for which an acquisition value obtained by acquiring a deflection amount of a predetermined representative position at the articulated arm for each dimension of a three-dimensional coordinate system is not more than a threshold corresponding to a target precision of the articulated arm.

According to an aspect of an embodiment, both of the high precision of a trajectory and the speed-up of a moving speed can be satisfied.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is a side view illustrating the configuration of a robot according to an embodiment;

FIG. 2 is a pattern diagram illustrating a movement of an articulated arm;

FIG. 3A is a diagram illustrating an example of a threshold for each direction component of an amount of deflection at a point P;

FIG. 3B is a diagram illustrating rigidity of each speed reducer for each direction component;

FIG. 3C is a diagram illustrating an example of a selection condition of each motor;

FIG. 4A is the first diagram illustrating a selection sequence of each speed reducer and motor;

FIG. 4B is the second diagram illustrating a selection sequence of each speed reducer and motor;

FIG. 4C is the third diagram illustrating a selection sequence of each speed reducer and motor;

FIG. 5 is a diagram illustrating a correspondence relationship between an angle of deflection and a target precision of the articulated arm;

FIG. 6A is a diagram illustrating a first offset of a third arm part; and

FIG. 6B is a diagram illustrating a second offset of the third arm part.

### DESCRIPTION OF EMBODIMENT

Hereinafter, a robot and a method for manufacturing the same according to an embodiment of the present disclosure will be explained in detail with reference to the accompanying drawings. In addition, the embodiment disclosed below is not intended to limit the present invention.

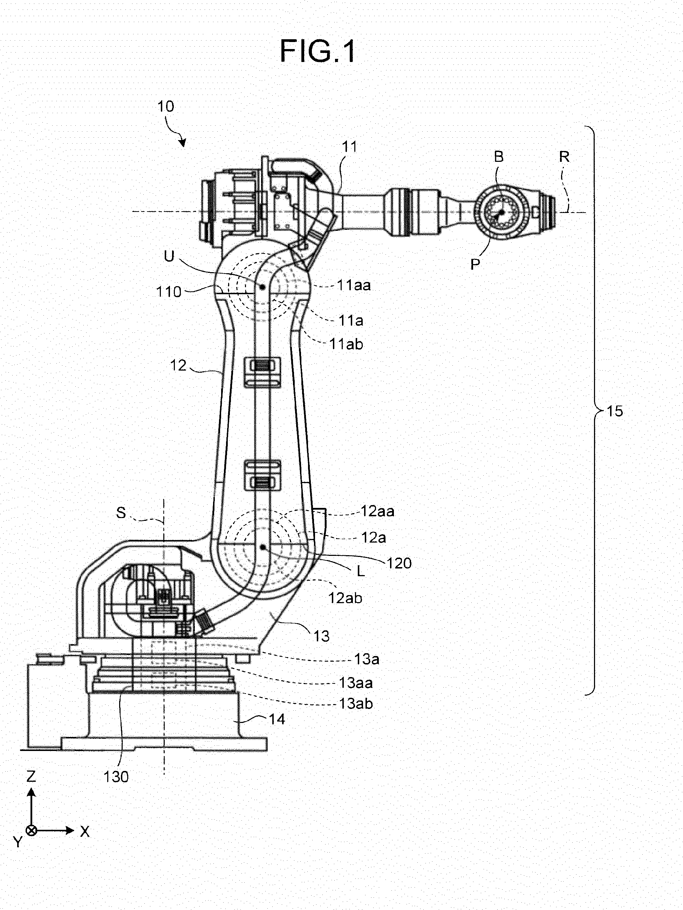

First, the configuration of a robot according to an embodiment is explained with reference to FIG. 1. FIG. 1 is a side view illustrating the configuration of a robot 10 according to the embodiment. In order to make an explanation understandable, a three-dimensional rectangular coordinate system that has Z-axis of which the positive direction is a vertically upward direction is illustrated in FIG. 1. The rectangular coordinate system can be also illustrated in other drawings that are used for the following explanations.

As illustrated in FIG. 1, the robot 10 includes a first arm part 11, a second arm part 12, a third arm part 13, and a base 14. The bottom end of the first arm part 11 is supported by the second arm part 12 and its leading end supports an end effector (not illustrated).

The bottom end of the second arm part 12 is supported by the third arm part 13 and its leading end supports the first arm part 11. The bottom end of the third arm part 13 is supported by the base 14 and its leading end supports the second arm part 12. The base 14 is fixed on an installation surface such as a floor.

Herein, the first arm part 11 and the second arm part 12 are connected via a first joint 11a. The first joint 11a is provided with a first speed reducer 11aa and a first motor 11ab. The first arm part 11 rotates around the U-axis parallel to Y-axis in accordance with the drive of the first speed reducer 11aa and the first motor 11ab.

The second arm part 12 and the third arm part 13 are connected via a second joint 12a. The second joint 12a is provided with a second speed reducer 12aa and a second motor 12ab. The second arm part 12 rotates around the L-axis parallel to Y-axis in accordance with the drive of the second speed reducer 12aa and the second motor 12ab.

The third arm part 13 and the base 14 are connected via a third joint 13a. The third joint 13a is provided with a third speed reducer 13aa and a third motor 13ab. The third arm part 13 rotates around the S-axis parallel to Z-axis in accordance with the drive of the third speed reducer 13aa and the third motor 13ab.

In this case, the first speed reducer 11aa, the second speed reducer 12aa, the third speed reducer 13aa, the first motor 11ab, the second motor 12ab, and the third motor 13ab are simply illustrated in FIG. 1. These can be omitted in other drawings that are used for the following explanations.

Hereinafter, the first speed reducer 11aa, the second speed reducer 12aa, and the third speed reducer 13aa may be collectively referred to as "each speed reducer", and the first motor 11ab, the second motor 12ab, and the third motor 13ab may be collectively referred to as "each motor".

In this way, the robot 10 according to the embodiment includes a so-called articulated arm 15, of which arm parts are connected via joints to perform multi-axis operations. The articulated arm 15 further has joints such as a joint that rotates around the R-axis parallel to X-axis and a joint that rotates around the B-axis parallel to Y-axis. However, the present embodiment is mainly explained by using the first joint 11a, the second joint 12a, and the third joint 13a.

As illustrated in FIG. 1, in the present embodiment, a point P is particularly defined as an intersection point of the R-axis and the B-axis. It is assumed that this point P indicates a predetermined representative position of the articulated arm 15 of the robot 10.

The robot 10 according to the embodiment selects and includes the first speed reducer 11aa, the second speed reducer 12aa, and the third speed reducer 13aa that have rigidity for which an amount of deflection of each dimension of a three-dimensional coordinate system for the point P is not more than a threshold corresponding to a target precision of the articulated arm 15.

Moreover, the robot 10 according to the embodiment selects and includes the first motor 11ab, the second motor 12ab, and the third motor 13ab, which respectively correspond to the first speed reducer 11aa, the second speed reducer 12aa, and the third speed reducer 13aa that are selected.

As illustrated in FIG. 1, the joints of the articulated arm 15 may respectively include a mounting part 110, a mounting part 120, and a mounting part 130 of which each can allow only the corresponding speed reducer and motor to be replaced.

When the mounting part 110, the mounting part 120, and the mounting part 130 are provided, the amount of deflection can be easily adjusted only by selecting each speed reducer and motor without replacing each arm part.
In other words, a time-consuming dedicated design can be omitted.

FIG. 1 only simply illustrates the mounting part 110, the mounting part 120, and the mounting part 130 and thus does not limit their configurations.

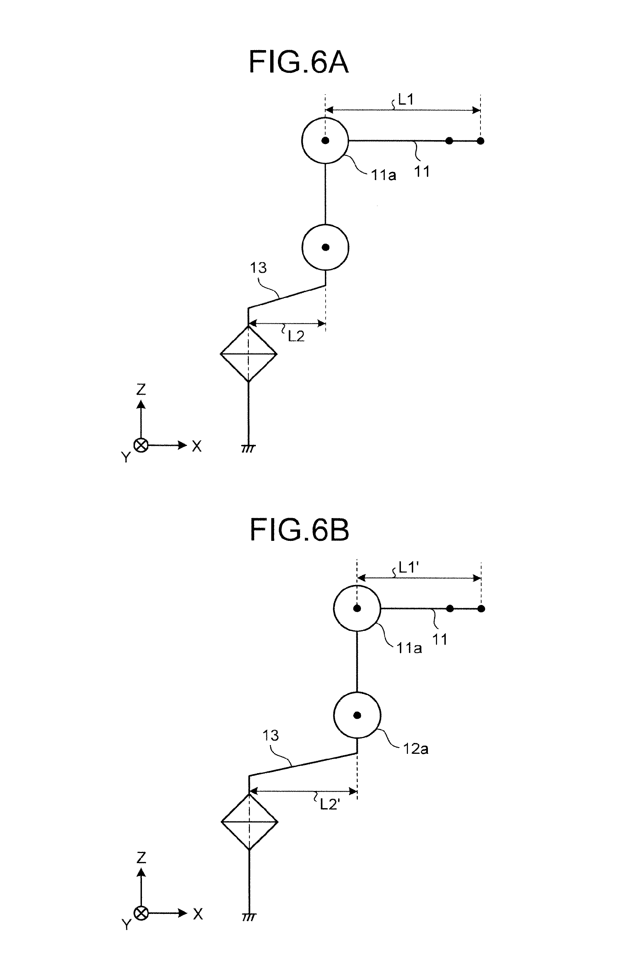

Hereinafter, a selection method for selecting only each speed reducer and motor is specifically explained regardless of the presence or absence of the mounting part 110, the mounting part 120, and the mounting part 130. Each arm part is described below with reference to FIGs. 6A and 6B from the viewpoint of lightweighting, particularly.

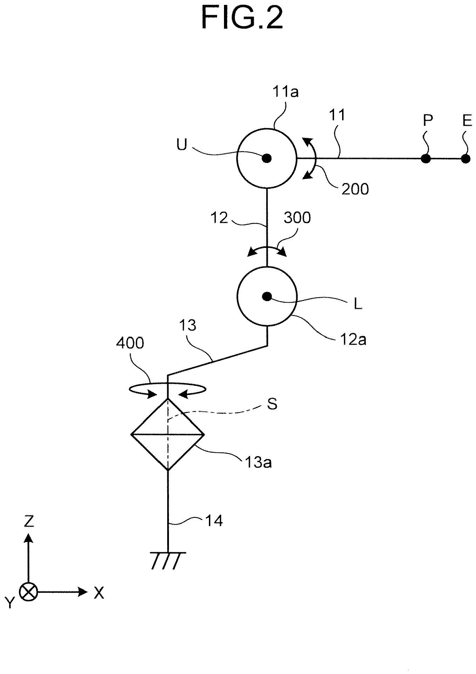

FIG. 2 is a pattern diagram illustrating a movement of the articulated arm 15. Hereinafter, a posture of the articulated arm 15 is referred to as a "reference posture" when the first arm part 11 is maintained parallel to X-axis and the second arm part 12 and both ends of the third arm part 13 are maintained parallel to Z-axis as illustrated in FIG. 2.

As illustrated in FIG. 2, the first joint 11a rotates the first arm part 11, of which the leading end supports an end effector E, around the U-axis (see an arrow 200 of FIG. 2). Moreover, the second joint 12a rotates the second arm part 12 around the L-axis (see an arrow 300 of FIG. 2). Moreover, the third joint 13a rotates the third arm part 13 around the S-axis (see an arrow 400 of FIG. 2).

Herein, in order to rotate the first arm part 11, the second arm part 12, and the third arm part 13, the first speed reducer 11aa provided in the first joint 11a, the second speed reducer 12aa provided in the second joint 12a, and the third speed reducer 13aa provided in the third joint 13a are conventionally selected in many cases in serious consideration of rigidity against gravitational moment.

Therefore, an amount of deflection at the point P is mainly analyzed for a Z-direction component of FIG. 2. The selection of each speed reducer is performed in serious consideration of rigidity against the Z direction.

However, because the first joint 11a, the second joint 12a, and the third joint 13a actually have different-direction rotating axes, it is preferable that each speed reducer is selected in consideration of rigidity against a shake of the rotating axis when a moment is added from a direction indicated by the rotating axis in addition to the Z direction.

Therefore, it is assumed that the selection method of each speed reducer and motor of the robot 10 according to the embodiment acquires and analyzes deflection amounts at the point P with respect to three directional components of three dimensions in addition to the Z direction component.

Each speed reducer is selected to have rigidity for which each of the acquired three directional-component deflection amounts is not more than a threshold corresponding to the target precision of the articulated arm 15.

The rigidity particularly includes "moment rigidity" that is rigidity against a shake of each rotating axis of the first joint 11a, the second joint 12a, and the third joint 13a and "torsional rigidity" that is rigidity against a torsion of a rotation direction centering on each rotating axis.

When a load-side inertia moment is defined as "load inertia" and a motor-side inertia moment is defined as "motor inertia", it is assumed that each motor is selected, which has substantially the same motor inertia as load inertia when each selected speed reducer is included as a load.

As illustrated in FIG. 2, because the first joint 11a rotates the first arm part 11 toward Z-axis when being viewed from the reference posture, it may be said that the U-axis that is a rotating axis for the rotation is largely concerned with deflection for the Z direction of the articulated arm 15.

Similarly, because the second joint 12a rotates the second arm part 12 toward X-axis when being viewed from the reference posture, it may be said that the L-axis that is a rotating axis for the rotation is largely concerned with deflection for the X direction of the articulated arm 15.

Similarly, because the third joint 13a rotates the third arm part 13 toward Y-axis when being viewed from the reference posture, it may be said that the S-axis that is a rotating axis for the rotation is largely concerned with deflection for the Y direction of the articulated arm 15.

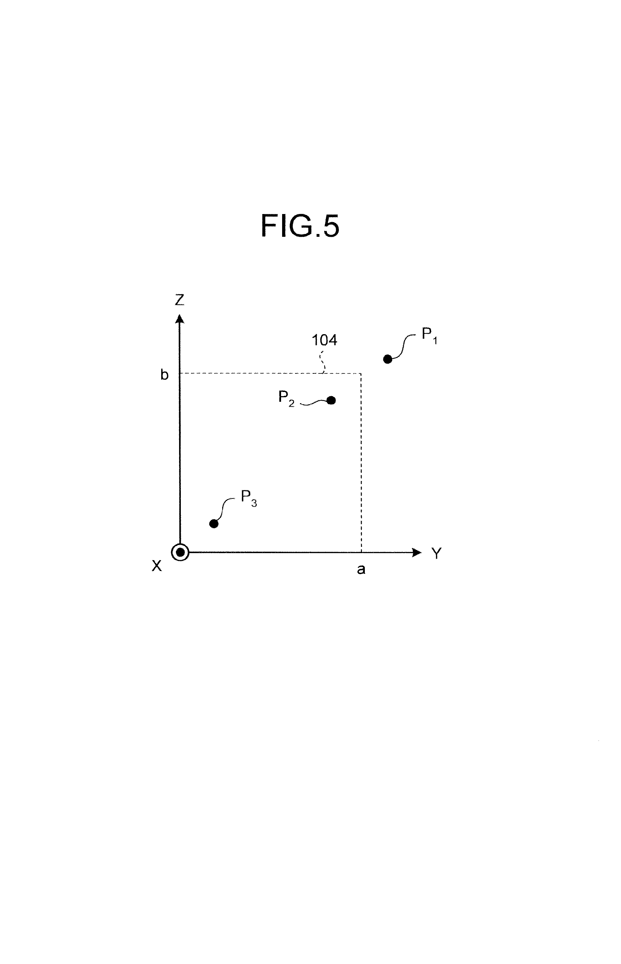

A relation between the rotating axes and XYZ directions influences a target precision of an angle of deflection to be described below. This point is described below with reference to FIG. 5.

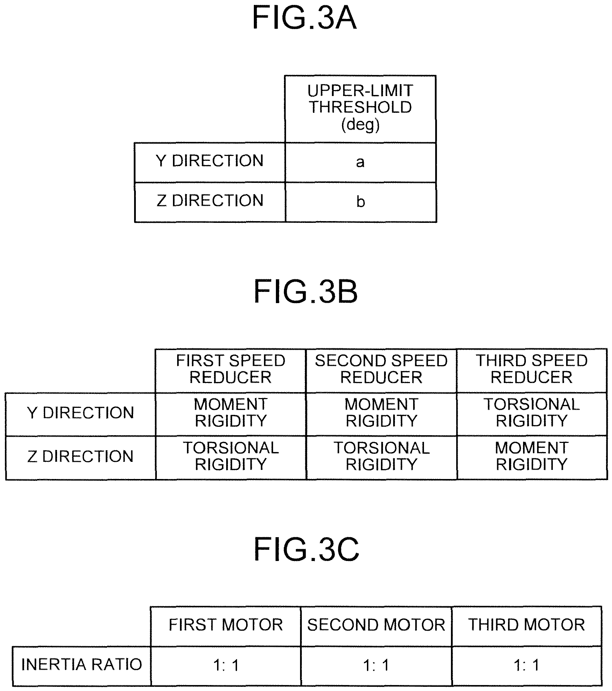

Hereinafter, the selection method of each speed reducer and motor of the robot 10 according to the embodiment will be further explained in detail with reference to FIGs. 3A to 5. First, the selection condition of each speed reducer and motor will be explained with reference to FIGs. 3A to 3C. FIG. 3A is a diagram illustrating an example of an upper-limit threshold for each direction component of a deflection amount at the point P.

As already illustrated in FIG. 2, the robot 10 according to the embodiment has the S-axis that indicates the Z direction and the axes U and L that are a rotating axis indicating the Y direction. For this reason, the selection method of each speed reducer of the robot 10 according to the embodiment employs the Y direction and the Z direction as a reference direction. Hereinafter, the Y direction and the Z direction will be centrally explained.

As illustrated in FIG. 3A, the selection method of each speed reducer and motor of the robot 10 according to the embodiment sets an upper-limit threshold of a deflection amount at the point P for each direction component.

For example, in FIG. 3A, a deflection amount is indicated by an angle of deflection (see "deg" of FIG. 3A) that is a displacement angle from a predetermined reference position. In this case, an upper-limit threshold in the Y direction of the angle of deflection is "a" and an upper-limit threshold in the Z direction is "b".

In other words, each speed reducer is selected on the basis of whether a speed reducer has rigidity by which a deflection angle at the point P is kept in a tolerance of a deflection angle determined by the upper-limit threshold "a" and the upper-limit threshold "b".

In other words, the tolerance may be referred to as a "target precision". Hereinafter, that a deflection angle of the point P is kept in a tolerance (that is to say, a deflection angle is not more than the upper-limit thresholds "a" and "b") may be described as "a target precision is satisfied".

Next, FIG. 3B is a diagram illustrating rigidity of each speed reducer for each direction component. As illustrated in FIG. 3B, because the first speed reducer 11aa provided in the first joint 11a (see FIG. 1) uses the U-axis indicating the Y direction as a rotating axis, moment rigidity is considered for the Y direction and torsional rigidity (specifically, spring constant) is considered for the Z direction to select a speed reducer that can satisfy a target precision.

As illustrated in FIG. 3B, this point is similarly applied to the second speed reducer 12aa of the second joint 12a (see FIG. 1) of which the rotating axis is the L-axis indicating the Y direction.

As illustrated in FIG. 3B, because the third speed reducer 13aa provided in the third joint 13a (see FIG. 1) uses the S-axis indicating the Z direction as a rotating axis, torsional rigidity is considered for the Y direction and moment rigidity is considered for the Z direction to select a speed reducer that can satisfy a target precision.

The determination of whether a target precision can be satisfied may not depend on a specific method. Therefore, the determination may use a simulation method or may use an actual measurement value determination method.

Next, FIG. 3C is a diagram illustrating an example of a selection condition of each motor. As illustrated in FIG. 3C, each motor can employ an inertia ratio that is a ratio between motor inertia and load inertia as one of selection conditions.

For example, FIG. 3C illustrates that the inertia ratios of the first motor 11ab provided in the first joint 11a (see FIG. 1), the second motor 12ab provided in the second joint 12a (see FIG. 1), and the third motor 13ab provided in the third joint 13a (see FIG. 1) are "1:1".

In this case, when each selected speed reducer is included as a load, each motor is selected of which the inertia ratio is close to "1:1" as much as possible, that is to say, the motor inertia is substantially the same as load inertia.

In this way, because an influence caused by an inertia is removed by making motor inertia and load inertia have substantially the same value and the movement of a motor side can be finely interlocked with the movement of a load side, the controllability and responsiveness of the articulated arm 15 can be improved. In other words, a moving speed of the articulated arm 15 can be speeded up.

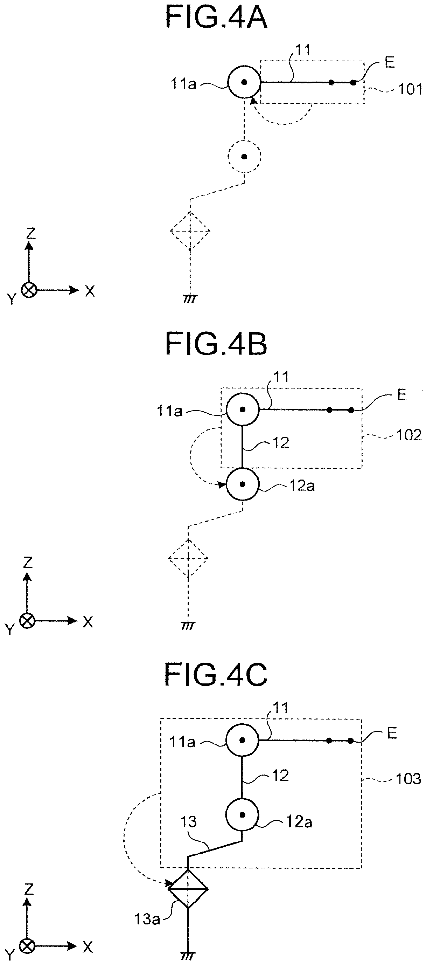

Next, a selection sequence of each speed reducer and motor will be explained with reference to FIGs. 4A to 4C. FIG. 4A is the first diagram illustrating a selection sequence of each speed reducer and motor. FIG. 4B is the second diagram illustrating a selection sequence of each speed reducer and motor. FIG. 4C is the third diagram illustrating a selection sequence of each speed reducer and motor.

First, as illustrated in FIG. 4A, the first speed reducer 11aa and the first motor 11ab of the first joint 11a become a target for selection. At this time, the first speed reducer 11aa is selected prior to the first motor 11ab. As already described with reference to FIG. 3B, the selection of the first speed reducer 11aa is performed by selecting a speed reducer that has the moment rigidity for the Y direction and the torsional rigidity for the Z direction, which satisfy a target precision.

Then, The first motor 11ab is selected in accordance with the selected first speed reducer 11aa. As already described with reference to FIG. 3C, the selection of the first motor 11ab is performed by selecting a motor that has substantially the same motor inertia as load inertia.

At this time, loads of the first motor 11ab are the end effector E and the first arm part 11, which are surrounded by a dotted rectangle 101 of FIG. 4A, and the first speed reducer 11aa that is previously selected.

Then, the verification of effectiveness is performed on the first speed reducer 11aa and the first motor 11ab that are selected. Herein, an example of the verification of effectiveness will be explained with reference to FIG. 5. FIG. 5 is a diagram illustrating a correspondence relationship between a deflection angle and a target precision of the articulated arm 15.

In order to make an explanation understandable, FIG. 5 illustrates a three-dimensional coordinate system of XYZ axes when being viewed from the positive direction of X-axis. In other words, two-dimensional components of YZ axes are mainly explained herein.

As a prerequisite of explanation that uses FIG. 5, it is assumed that combinations of the first speed reducer 11aa and the first motor 11ab that are selected are three types. Herein, the first set is referred to as the first candidate, the second set is referred to as the second candidate, and the third set is referred to as the third candidate.

It is assumed that a deflection angle at the point P acquired by using the first candidate is P₁. Similarly, it is assumed that a deflection angle using the second candidate is P₂ and a deflection angle using the third candidate is P₃. It is assumed that the deflection angles are already acquired by a simulation, an actual measurement, or the like. Moreover, a predetermined reference position of the deflection angle is the intersection point of XYZ axes.

As illustrated in FIG. 5, when the upper-limit thresholds at the Y direction and the Z direction of the deflection angle are "a" and "b", the target precision of the deflection angle can be indicated by a range that is surrounded by a dotted line 104 and YZ axes.

Herein, as illustrated in FIG. 5, because the deflection angle P₁ of the first candidate is outside the target precision, the first candidate is excluded from the final selection. If the combination of the selected the first speed reducer 11aa and the first motor 11ab is only the first candidate, the explanation is returned to the procedure explained by using FIG. 4A.

On the other hand, because the deflection angle P₂ of the second candidate and the deflection angle P₃ of the third candidate are within the target precision, any of the second and third candidates can be the final selection target.

As illustrated in FIG. 5, the deflection angle P₂ of the second candidate is relatively far away from the predetermined reference position and the deflection angle P₃ of the third candidate is relatively close to the predetermined reference position. In this case, when one of the second and third candidates is finally selected, a method to be explained next may be used, for example.

More specifically, as already described in the explanations using FIG. 2, the U-axis (see Fig. 2) that is a rotating axis of the first joint 11a is largely concerned with the deflection for the Z direction of the articulated arm 15. However, any of the second and third candidates can be selected in accordance with the related degree.

For example, because the deflection for the Z direction can be resolved if the deflection angle is at least less than the upper-limit threshold "b" for the first joint 11a that includes the U-axis as illustrated in FIG. 5 when the deflection for the Z direction substantially depends on the influence of the U-axis, the second candidate can be selected even if the deflection angle P₂ is far away from the predetermined reference position.

On the other hand, when the deflection for the Z direction depends on the compositive influence that includes other factors such as the L-axis and the S-axis in addition to the U-axis, it is preferable that the third candidate indicating the deflection angle P₃ closer to the predetermined reference position is selected as illustrated in FIG. 5.

In this way, the high precision of a trajectory of the articulated arm 15 can be achieved by verifying the effectiveness of the selected the first speed reducer 11aa and the first motor 11ab.

It is obvious that the verification method can be applied to the case where "the second speed reducer 12aa and the second motor 12ab" or "the third speed reducer 13aa and the third motor 13ab" are selected in addition to the case where the first speed reducer 11aa and the first motor 11ab are selected. Furthermore, the verification method can be applied to comprehensive verification when all speed reducers and motors are together selected.

It is again explained with reference to FIGs. 4A to 4C. After the first speed reducer 11aa and the first motor 11ab of the first joint 11a illustrated in FIG. 4A are selected, the next selection target is the second speed reducer 12aa and the second motor 12ab of the second joint 12a illustrated in FIG. 4B.

Among them, the second speed reducer 12aa is selected prior to the second motor 12ab. As already described with reference to FIG. 3B, the selection of the second speed reducer 12aa is performed by selecting a speed reducer that has the moment rigidity for the Y direction and the torsional rigidity for the Z direction, which satisfy the target precision.

Then, the second motor 12ab is selected in accordance with the selected the second speed reducer 12aa. As already described with reference to FIG. 3C, the selection of the second motor 12ab is performed by selecting a motor that has substantially the same motor inertia as load inertia.

At this time, loads of the second motor 12ab are the end effector E, the first arm part 11, the first joint 11a, and the second arm part 12, which are surrounded by a dotted rectangle 102 of FIG. 4B, and the second speed reducer 12aa that is previously selected.

Then, the verification of the effectiveness is performed on the selected the second speed reducer 12aa and the second motor 12ab similarly to the case of the first speed reducer 11aa and the first motor 11ab (see FIG. 5).

Similarly, the verification of the effectiveness is also performed on the third speed reducer 13aa and the third motor 13ab of the third joint 13a. As illustrated in FIG. 4C, the third speed reducer 13aa and the third motor 13ab of the third joint 13a become the next selection target. Among them, the third speed reducer 13aa is selected prior to the third motor 13ab.

The selection of the third speed reducer 13aa is performed by selecting a speed reducer that has the torsional rigidity for the Y direction and the moment rigidity for the Z direction that satisfy the target precision (see FIG. 3B).

Then, the third motor 13ab is selected in accordance with the selected third speed reducer 13aa. The selection of the third motor 13ab is also performed by selecting a motor that has substantially the same motor inertia as load inertia (see FIG. 3C).

At this time, loads of the third motor 13ab are the end effector E, the first arm part 11, the first joint 11a, the second arm part 12, the second joint 12a, and the third arm part 13, which are surrounded by a dotted rectangle 103 of FIG. 4C, and the third speed reducer 13aa that is previously selected.

Then, the verification of the effectiveness is also performed on the selected the third speed reducer 13aa and the third motor 13ab similarly to the case of the first speed reducer 11aa and the first motor 11ab (see FIG. 5). In this way, speed reducers and motors are selected in sequence from the leading end of the articulated arm 15.

Herein, it has been explained that the speed reducer and motor are selected for each joint and effectiveness is verified in each case. However, the embodiment is not limited to this method. For example, speed reducers and motors may be all selected in sequence from the leading end of the articulated arm 15, and then the comprehensive verification of effectiveness may be finally performed.

Meanwhile, it has been explained till now that compatibility of the high precision of a trajectory of the articulated arm 15 and the speed-up of a moving speed is achieved by appropriately selecting the speed reducer and motor mainly provided in each joint. Furthermore, the weight of each arm part may be reduced.

The lightwezghting of each arm part can also result in the lightweighting of each speed reducer and motor and can easily result in the reduction of load inertia.

Herein, an offset of each arm part related to lightweighting of each arm part is explained with reference to FIGs. 6A and 6B. FIG. 6A is a diagram illustrating a first offset of the third arm part 13. FIG. 6B is a diagram illustrating a second offset of the third arm part 13.

As illustrated in FIG. 6A, it is assumed that the arm length of the first arm part 11 is "L1" and the offset of the third arm part 13 is "L2". Herein, it is assumed that high rigidity of the first joint 11a and lightweighting of the first arm part 11 are together achieved.

As illustrated in FIG. 6B, it is assumed that the arm length of the first arm part 11 becomes an arm length L1' shorter than the arm length L1 in accordance with the lightweighting. In this case, the movable range of the articulated arm 15 is narrowed by shortening of the first arm part 11.

At this time, as illustrated in FIG. 6B, the movable range of the articulated arm 15 can be maintained within a predetermined movable range by elongating the offset of the third arm part 13 to an offset L2' longer than an offset L2, for example.

As described above, the robot according to the embodiment includes an articulated arm and a speed reducer provided in each joint of the articulated arm. The speed reducer has rigidity for which an acquisition value obtained by acquiring a deflection amount of a predetermined representative position at the articulated arm for each dimension of a three-dimensional coordinate system is not more than a threshold corresponding to a target precision of the articulated arm. Moreover, the robot according to the embodiment further includes a motor provided in each joint. When the speed reducer is included as a load, the motor has substantially the same motor inertia as load inertia.

Therefore, according to the robot according to the embodiment can satisfy both of the high precision of a trajectory and the speed-up of a moving speed.

Another aspect of the embodiment is further described. It has been explained in the embodiment that each motor has substantially the same motor inertia as load inertia when each selected speed reducer is selected as a load. However, the present embodiment is not limited to this. In other words, when a speed reducer is not included, each motor may be selected in such a manner that the motor has substantially the same motor inertia as load inertia in which a speed reducer is not included as a load.

In the embodiment described above, it has been explained as an example that two directions are used as a reference direction. However, the present embodiment is not limited to this. For example, if directions of a rotating axis of each joint of the articulated arm are three directions, three directions may be used as a reference direction. Therefore, the configuration of the articulated arm is not limited to that of the embodiment described above.

It has been explained in the embodiment that a deflection amount of a predetermined representative position at the articulated arm is analyzed for each dimension of a three-dimensional coordinate system. However, the present embodiment is not limited to this.
For example, a deflection amount may be analyzed for many dimensions more than three dimensions.

In the embodiment described above, it has been explained as an example that a rectangular coordinate system is used as a coordinate system. However, if multidirectional components can be analyzed, the present embodiment is not limited to this.

It has been explained in the embodiment that a deflection amount is expressed by a deflection angle that is a displacement angle away from a predetermined reference position. However, the present embodiment is not limited to this. For example, a deflection amount may be based on a distance or the like away from a predetermined reference position.

## Claims

1. A robot (10) comprising:
an articulated arm (15);
a speed reducer (11aa, 12aa, 13aa) that is provided in a joint (11a, 12a, 13a) of the articulated arm (15), and
the speed reducer (11aa, 12aa, 13aa) having rigidity for which an acquisition value obtained by acquiring a deflection amount of a predetermined representative position at the articulated arm (15) for each dimension of a three-dimensional coordinate system is not more than a threshold corresponding to a target precision of the articulated arm (15).

2. The robot (10) according to claim 1, wherein the speed reducer (11aa, 12aa, 13aa) has, as the rigidity, moment rigidity that is rigidity against a shake of a rotating axis of the joint (11a, 12a, 13a) and torsional rigidity that is rigidity against a torsion for a rotation direction centering on the rotating axis.

3. The robot (10) according to claim 1 or 2, further comprising a motor (11ab, 12ab, 13ab) that is provided in the joint (11a, 12a, 13a), wherein
the motor (11ab, 12ab, 13ab) has substantially the same inertia moment of the motor (11ab, 12ab, 13ab) side as load-side inertia moment when the speed reducer (11aa, 12aa, 13aa) is included as a load.

4. The robot (10) according to claim 3, wherein the joint (11a, 12a, 13a) includes a mounting part (110, 120, 130) that allows replacement of the speed reducer (11aa, 12aa, 13aa) and the motor (11ab, 12ab, 13ab).

5. A method for manufacturing the robot (10), the method comprising:
selecting a speed reducer (11aa, 12aa, 13aa) and a motor (11ab, 12ab, 13ab) provided in each joint (11a, 12a, 13a) of an articulated arm (15) in sequence from the joint (11a, 12a, 13a) close to a leading end of the articulated arm (15);
acquiring a deflection amount of a predetermined representative position at the articulated arm (15), when the selected the speed reducer (11aa, 12aa, 13aa) and the motor (11ab, 12ab, 13ab) are used, as an acquisition value for each dimension of a three-dimensional coordinate system; and
verifying whether the acquired acquisition value is not more than a threshold corresponding to a target precision of the articulated arm (15).
